# EUROPEAN PATENT APPLICATION

(11) **EP 1 327 713 A1**
(43) Date of publication of application: **16.07.2003**
(21) Application number: 01967702.0
(22) Date of filing: 17.09.2001
(51) Int. Cl.: D04H 3/16, B32B 5/26, B32B 27/32

(54) **MULTILAYER NON-WOVEN FABRIC AND USE THEREOF**

(30) Priority: 18.09.2000 JP 2000282065
(71) Applicant: Idemitsu Unitech Co., Ltd., Tokyo 112-0002 (JP)
(72) Inventor: ISHIKAWA, Masahide, Kujukuri-machi, Sanbu-gun, Chiba 283-010 (JP); KURAHASHI, Akihiko, Kujukuri-machi, Sanbu-gun, Chiba 283-010 (JP)
(74) Representative: Hucker, Charlotte Jane
(86) International application number: JP0108051
(87) International publication number: WO02022933

(57) **Abstract**

A multilayer non woven fabric having a polypropylene spun bonded non woven fabric and a polypropylene melt blown non woven fabric, characterized in that it has a bending resistance, the sum of the values for longitudinal and transverse directions as measured according to JIS L 1096 6. 19.1 A method (45 degree cantilever method) of 70 to 120 mm, the surface of the spun bonded non woven fabric has a static friction coefficient of 0.1 to 0.4. The multilayer non woven fabric preferably has a polypropylene melt brown non woven fabric layer between polypropylene spun bonded non woven fabric layers.

## Description

### Technical Field

The present invention relates to a multi layer non woven fabric, and relates to a multi layer non woven fabric made of a polypropylene based resin which has a liquid barrier property, fine powder barrier property and gas permeability, particularly is excellent in feeling and skin touch feeling and in strength and secondary processability, and can be suitably used for various applications, particularly, back sheet materials and side gather materials for absorptive articles such as dispensable diapers and the like and medical and powder wrapping materials and the like, and to a use thereof.

### Background Art

Spun bonded non woven fabrics are used in a lot of fields because of excellent continuous spinning and productivity together with properties such as excellent strength, suitable bending resistance, gas permeability and the like. As the thermoplastic resin used in this spun bonded non woven fabric, long fiber non woven fabric, polyamide based resins and polyester based resins have been used due to a melt spinning property, fiber property and the like, however, polypropylene based resins, common resins, are being used frequently in absorptive articles such as disposable diapers and the like.

These polypropylene based resin non woven fabrics include a lot of resins different in crystallinity even in the case of homopolymers of propylene, and there are known non woven fabrics made of resins having various properties such as melting point, strength, elastic modulus and the like by a copolymer of propylene with ethylene, butene-1 and the like. Such a non woven fabric using a polypropylene based resin has, in the case of a resin having high crystallinity, an excellent spinning property, however, is inferior in flexibility and has a problem in feeling. In the case of a propylene based resin having low crystallinity or melting point, flexibility is obtained, however, there are problems that a slimy feeing occurs, friction resistance between fibers, between fiber and other metals and the like in spinning increases, leading to an extremely poor spinning property.

At present, as the polypropylene based resin non woven fabric used in absorptive articles such as disposable diapers and the like, there are frequently used those produced by using a resin having an isotactic pentad fraction of about 90 mol%, index of crystallinity, due to strength, spinning property, rigidity and the like thereof.

However, there is a problem that the use feelings such as flexibility, feeling, skin tough and the like of the resulted non woven fabric are not necessarily sufficient when used in absorptive articles such as disposable diapers, sanitary napkins, incontinence pads and the like

Though a spun bonded non woven fabric made of this polypropylene based resin long fiber is a material excellent in gas permeability, a liquid barrier property, in use as the absorptive article, is an essential required property particularly in a back sheet for absorptive articles, depending on use places. Therefore, for satisfying the liquid barrier property and property of a polypropylene based resin non woven fabric simultaneously, generally used are non woven fabric complex materials obtained by complexing with other moisture permeable water preventing materials. Likewise, a side gather is also used in complex with materials having excellent water pressure resistance.

However, an absorptive article using this non woven fabric complex material comes in direct contact with skin, and with clothes in use, or comes in contact with hands of workers in detaching. Therefore, it is suggested that use feelings such as flexibility, feeling, skin touch and the like and a working feeling are not satisfactory, and its touch feeling is as of a plastic film, and not suitable also for skin. Accordingly, non woven fabric laminates having improved these properties are desired.

For this, there are suggested various improvements in the feeling, skin tough feeling and the like as the surface material of these absorptive articles. For example, (1) Japanese Patent Application Laid Open (JP-A) No. 2-88056 suggests that a polyolefin based melt blown non woven fabric having a fineness of less than 1 denier and having a mass per unit area (Metsuke) of 0.2 go 10 g/m² is contacted with and laminated on a polyolefin based spun bonded non woven fabric having a fineness of 1 to 4 denier and having a mass per unit area of 8 to 28 g/m² when the non woven fabric shows stickiness. However, though an effect is observed in the case if a spun bonded non woven fabric having a narrow fiber diameter, when the fiber diameter decreases, the bending resistance of a spun bonded non woven fabric lowers, and working is not stable in steps of running of a laminate, heat sealing, and the like, and high speed processing and automation may become difficult, in secondary processes.

(2) JP-A No. 9-143853 suggests a laminated non woven fabric obtained by fusing a complex spun bonded non woven fabric made of two kinds of resins having a melting point difference of 10°C or more to two kinds of melt blown non woven fabrics having a melting point difference of 10°C or more, with a resin of low melting point and a non woven fabric. However, in this case, feeling is generated by the melt blown non woven fabric and is a property as the surface material of the melt blown non woven fabric, consequently, a problem of the melt blown non woven fabric cannot be solved, and in the production of the complex non woven fabric, an apparatus becomes complicated, and melting point and flowability are different between the complex resins, leading to difficulty in spinning, in some cases.

Further, (3) JP-A No. 10-16115 suggests a moisture permeable film obtained by heat fusing a gas permeable film to a non woven fabric (spun bonded) containing a resin having melting point lower than or the same as that of a resin in the above mentioned gas permeable film, at an emboss are ratio of 5 to 20% by emboss processing of an emboss pattern having no angle. However, in this case, resins to be combined are limited, and the spun bonded non woven fabric itself is not particularly improved, therefore, it is estimated that improvements in surface property and feeling are limited.

Furthermore, (4) JP-A No. 11-972 suggests a moisture permeable complex film obtained by laminating a polyolefin based non woven fabric having a mass per unit area of 5 to 20 g/m², an average fiber diameter of 0.2 to 2 denier and a bulk specific gravity of 0.05 or less on at least one surface of a polyolefin based biaxially stretched moisture permeable film. However, this complex film is composed mainly of a moisture permeable stretched film, the non woven fabric itself is a special material that is, the complex film is a special film which is not a general laminate mainly composed of a spun bonded non woven fabric.

Still further, (5) JP-A No. 11-290381 discloses a back sheet for absorptive article in which a polypropylene based wet non woven fabric layer constitutes one of surface layers of a laminate obtained by alternately laminating a layer made of a polypropylene based melt blown non woven fabric and a layer made of a polypropylene based wet non woven fabric. Namely, by adoption of a short fiber wet non woven fabric, a surface sliding property and a liquid barrier property are intended to be secured. However, the fiber diameter of a wet non woven fabric is relatively narrow, and a problem occurs that a production method becomes complicated.

As described above, the moisture permeable water preventing non woven fabric complex material does not hold properties in performance such as strength, flexibility, bending resistance and the like and features in production such as a spinning property and cheapness, of conventional polypropylene based resin spun bonded non woven fabrics, and only provides fine fiber diameter, soft resin use, short fiber, complex spinning and the like.

Therefore, these improvement technologies have a maximum problem in that a secondary processability which is an important property in use of a spun bonded non woven fabric in large amount in disposable diapers and the like, namely, suitable bending resistance necessary for handing a non woven fabric stably in complexing processes such as transferring of a non woven fabric, heat adhesion and the like is not maintained. Therefore, it is difficult to speed up, automation and stable production in production of an absorptive article.

Consequently, particularly due to secondary processabilities and productivities such as a spinning property and the like, complex materials with a polypropylene spun bonded non woven fabric are still used in spite of insufficient feeling, skin touch and the like, as the non woven fabric complex material, in current conditions. Therefore, improvement of these problems of polypropylene spun bonded non woven fabrics is strongly desired by users and producers of absorptive articles such as disposable diapers and the like.

An object of the present invention is to provide a moisture permeable water preventing multi layer non woven fabric substantially holding properties such as strength, secondary processabilities and the like essentially revealed by polypropylene based resin spun bonded non woven fabrics, and additionally having excellent flexibility, feeling, skin touch feeling and the like, particularly, a multi layer non woven fabric which can be suitably used for back sheets and side gathers of absorptive articles such as disposable diapers, sanitary napkins and the like, and for medical and powder wrapping materials and the like, and a use thereof.

### Disclosure of the Invention

The present inventors have intensively studied use feelings required for non woven fabric final articles, particularly, for absorptive articles and the like, such as flexibility, feeling, skin touch feeling and the like, regarding non woven fabric materials endowed with a water preventing property and a powder barrier property, while utilizing functions such as gas permeability, flexibility, strength, heat resistance, secondary processability, automation fitness and the like of polypropylene based resin spun bonded non woven fabrics. As a result, the present inventors have found that even a spun bonded non woven fabric can remarkable improve use feelings such as flexibility, feeling, skin touch and the like as compared with conventional multi layer non woven fabrics even if resin used, fiber diameter and mass per unit area are equivalent, by controlling its friction property and by complex with a melt blown non woven fabric, leading to completion of the invention based on this finding.

Namely, the present invention provides
(1) A multi layer non woven fabric having a polypropylene based resin spun bonded non woven fabric and a polypropylene based resin melt blown non woven fabric, characterized in that it has a bending resistance [the sum of the values for longitudinal and transverse directions as measured according to JIS L 1096 6. 19.1 A method (45° cantilever method)] of 70 to 120 mm, and the surface of the spun bonded non woven fabric has a static friction coefficient of 0.1 to 0.4;
(2) The multi layer non woven fabric according to (1) wherein the multi layer non woven fabric has a polypropylene based resin melt blown non woven fabric between propylene based resin spun bonded non woven fabrics;
(3) The multi layer non woven fabric according to (1) or (2) wherein the spun bonded non woven fabric has an average fiber diameter of 10 to 30 µm and the mass per unit area of the multi layer non woven fabric is from 10 to 50 g/m2;
(4) The multi layer non woven fabric according to any of (1) to (3) wherein the spun bonded non woven fabric contains a lubricant in an amount of 0.05 to 1.0% by weight;
(5) The multi layer non woven fabric according to any of (1) to (4) wherein the lubricant is a fatty amide compound;
(6) An absorptive article obtained by using the multi layer non woven fabric according to any of (1) to (5);
(7) A medical sheet obtained by using the multi layer non woven fabric according to any of (1) to (5); and
(8) A powder wrapping material obtained by using the multi layer non woven fabric according to any of Claims (1) to (5).

### BEST MODES FOR CARRYING OUT THE INVENTION

The present invention will be illustrated in detail below.

The multi layer non woven fabric is a multi layer non woven fabric having a polypropylene based resin spun bonded non woven fabric and a polypropylene based resin melt blown non woven fabric, characterized in that it has a bending resistance [the sum of the values for longitudinal and transverse directions as measured according to JIS L 1096 6. 19.1 A method (45° cantilever method)] of 70 to 120 mm, and the surface of the spun bonded non woven fabric has a static friction coefficient of 0.1 to 0.4.

Namely, it is a multi layer non woven fabric having a polypropylene based resin spun bonded non woven fabric constituting at least one surface of the multi layer non woven fabric, and a polypropylene based resin melt blown non woven fabric, in which it has a bending resistance [the sum of the values for longitudinal and transverse directions as measured according to JIS L 1096 6. 19.1 A method (45° cantilever method)] of 70 to 120 mm, and the surface of the spun bonded non woven fabric has a static friction coefficient of 0.1 to 0.4.

The multi layer non woven fabric of the present invention can be produced by inline or secondary connection of a polypropylene based resin spun bonded non woven fabric having a static friction coefficient of 0.1 to 0.4 and a polypropylene based resin melt blown non woven fabric. Preferable is a multi layer non woven fabric of three layer structure having a polypropylene based resin melt blown non woven fabric sandwiched by polypropylene based resin spun bonded non woven fabrics.

Materials constituting the multi layer non woven fabric of the present invention will be described below.

### [Polypropylene based resin spun bonded non woven fabric]

The polypropylene based resin spun bonded non woven fabric may advantageously be that having a static friction coefficient within a range from 0.1 to 0.4. Therefore, the means of controlling the static friction coefficient is optional, and adoption of various means is considered. However, the reason for a fact that the multi layer non woven fabric of the present invention has excellent flexibility, feeling and skin touch feeling is believed to an effect by improvement of a sliding property of mutual long fibers in a spun bonded non woven fabric, therefore, it is preferable that not only a fiber sliding property of the surface part of a non woven fabric but also a fiber sliding property of the whole non woven fabric is improved and resultantly, the static friction coefficient as a surface property is within a specific range.

The fiber diameter of a polypropylene based resin spun bonded non woven fabric constituting the multi layer non woven fabric of the present invention is preferably from 10 to 30 µm, more preferably from 15 to 25 µm. Here, when less than 10 µm, strength and bending resistance lower and secondary processabilities lower in come cases, and its use field is restricted significantly. While when over 30 µm, flexibility, feeling and skin tough feeling lower, and the features of the present invention as a multi layer non woven fabric lose, and particularly, application to absorptive articles, medical materials, wrapping bodies and the like is difficult in some cases.

The mass per unit area of the polypropylene based resin spun bonded non woven fabric in the multi layer non woven fabric is preferably from 5 to 40 g/m², more preferably from 7 to 30 g/m². Here, when the mass per unit area is less than 5 g/m², strength is not sufficient, bending resistance is low, and secondary processabilities are inferior in some cases, while when over 40 g/m2, flexibility, gas permeability, skin touch feeling and the like decrease, the features of the present invention as a multi layer non woven fabric lose, and depending on applications, use is difficult in some cases. This mass per unit area of the polypropylene based resin spun bonded non woven fabric is that when the spun bonded non woven fabric exists as a single layer in the multi layer non woven fabric, and in the case of two layers, the above mentioned mass per unit area is the sum of the mass per unit area of the two layers.

The second feature of the multi layer non woven fabric of the present invention is that the polypropylene based resin spun bonded non woven fabric has a static friction coefficient of 0.1 to 0.4, preferably 0.12 to 0.35. Here, when the static friction coefficient is less than 0.1, processabilities decrease due to excess sliding in secondary processing, and because of decrease in the static friction coefficient, the use amount of additives or surface treatment agents generally adopted is required to be large, deteriorating in economy, in some cases. Further, a connecting property by heat seal, additives and the like in secondary processing tends to decrease undesirably, in some cases. When over 0.4, an effect of improving use feelings such as flexibility, feeling, skin touch feeling and the like is insufficient. Polypropylene based resin spun bonded non woven fabrics can be appropriately selected and combined based on applications in which a multi layer non woven fabric is used, necessary conditions, gas permeability, water resistance (non water permeability) and the like.

The static friction coefficient of the surface of the multi layer non woven fabric of the present invention can be measured according to ASIM-D1894. Specifically, based on the following measurement conditions:
Static friction coefficient measuring apparatus: AN type manufactured by Toyo Seiki Seisakusho K.K.
Load plate: iron plate of 63.6 mm×102.2 mm×19.4 mm (height) and load: 8.87 N
Inclination speed: 2.7°/second,
   measurement surfaces of non woven fabrics are mutually overlaid, sliding angle (θ) is measured, tan θ is measured, to give a static friction coefficient. When the numerical value is smaller, a sliding property is more excellent.

The polypropylene based resin used in the polypropylene based resin spun bonded non woven fabric used in the multi layer non woven fabric of the present invention is not particularly restricted, and listed are homopolymers of propylene, and copolymers of propylene with at least one of α-olefins such as ethylene, butene-1, 4-methyl-pentene-1, hexane-1, octane-1 and the like. As these polypropylene based resins, various resins different in crystallinity, molecular weight and molecular weight distribution are appropriately selected based on conditions required for a non woven fabric, depending on selection, polymerization conditions and the like of a catalyst in polymerization. This selection is investigated from the standpoints of the strength, flexibility, application and the like of a non woven fabric, and as described above, there are used homopolymers of propylene or polypropylene copolymers having a copolymerization ratio of preferably 5 wt% or less, more preferably 3 wt% or less, in view of a spinning property, flexibility, slimy feeling and the like.

Here, regarding crystallinity, when a non woven fabric is used as a material for absorptive article such as disposable diapers and the like, the isotactic pentad fraction is preferably selected in the range of from 88 to 95 mol%, more preferably from 89 to 93 mol%. Here, the isotactic pentad fraction (IPF) is an isotactic pentad fraction in pentad unit in a polypropylene molecule chain measured using nuclear magnetic resonance spectrum (¹³C-NMR) by isotope carbon described, for example, in "Macromolecules", vol. 28, no. 16, p. 5403 (1995).

The melt flow rate (MFR) [according to JIS K 7210, measurement temperature: 230°C, measurement load: 21.18 N] of a polypropylene based resin is in the range of from 5 to 200 g/10 minutes, preferably from 10 to 100 g/10 minutes. Particularly, as the absorptive article, those having a melt flow rate in the range of from 30 to 80 g/10 minutes are suitable.

Next, the means for obtaining a polypropylene based resin spun bonded non woven fabric having a static friction coefficient of 0.1 to 0.4, which is a feature of the present invention, is not particularly restricted, and various means are listed. Specifically, these are roughly classified into (1) methods of compounding a lubricant in a polypropylene based resin for spinning, conducting melt spinning, then, effecting aging, (2) methods of conducting surface treatment on fibers after spinning, and the like, for example.

Here, the lubricant is not particularly restricted, and there are mentioned fatty amide compounds, fatty acid compounds, paraffin and hydrocarbon resins, silicone based compounds, silicone based polymers, fluorine based compounds, fluorine based polymers such as copolymers of tetrafluoroethylene with propylene, copolymers of vinylidene fluoride with hexafluoropropylene, and the like; or mixtures thereof. Of them, fatty amide compounds are preferably used.

As the fatty amide compound, listed are fatty monoamide compounds, fatty diamide compounds, saturated fatty monoamide compounds, and unsaturated fatty diamide compounds. Specifically listed are lauric amide, myristic amide, palmitic amide, stearic amide, behenic amide, oleic amide, erucic amide, montanic amide, N,N'-methylene-bis-lauric amide, N,N'-methylene-bis-myristic amide, N,N'-methylene-bis-palmitic amide, N,N'-methylene-bis-behenic amide, N,N'-methylene-bis-oleic amide, N,N'-methylene-bis-erucic amide, N,N'-ethylene-bis-oleic amide, N,N'-ethylene-bis-erucic amide and the like, and it is also possible to use two or more of them in combination.

These fatty amide compounds, among them, erucic amide which is an unsaturated fatty monoamide compound is preferably used. The reason for this is that because of decrease in a spinning property by unnecessary projection of a fatty amide onto the surface in melt spinning of a non woven fabric, and of aging of a non woven fabric containing a fatty amide compound described later, erucic amide is suitable for decrease in the static friction coefficient of a non woven fabric. The content of this fatty amide compound is in the range of from 0.05 to 1 wt%, preferably from 0.1 to 0.7 wt% in a polypropylene based resin. This content is determined by totally judging the kind of a polypropylene based resin, resin properties thereof such as crystallinity, MFR and the like, the kind of a fatty amide compound, required conditions of the resulting non woven fabric, aging conditions and the like.

Therefore, for example, as a homopolymer of propylene, the isotactic pentad fraction is about 90 mol%, and when erucic amide is used, it is in the range of from 0.1 to 1.0 wt%, preferably from 0.2 to 0.6 wt%. In this case, depending on aging treatment conditions, when less than 0.1 wt%, it may be difficult to control the static friction coefficient of a non woven fabric in the range from 0.1 to 0.4, and when over 1.0 wt%, the amount of erucic amide on the surface of a non woven fabric increases, and deteriorations in appearance such as white powder generation and the like and decrease in a heat fusion property and secondary processabilities are caused, in some cases.

In a polypropylene based resin, there can be added known additive components generally used in non woven fabrics for applications of a multi layer non woven fabric, endowment of properties, and the like. As these known additive components, listed are neutralization agents such as calcium stearate, hydrotalcite and the like, phenol based, phosphorus based and sulfur based antioxidants and the like, heat stabilizers, nucleating agents, ultraviolet absorbers, light stabilizers, antistatic agents, flame retardants, pigments, dyes, or inorganic powders such as silica, talc, calcium carbonate, calcium oxide, magnesium oxide and the like.

In one example of a method of producing a spun bonded non woven fabric constituting the present invention, a polypropylene based resin is melt spun with a mixture obtained by dry blending a given amount of lubricant such as a fatty amide and the like with additive components added if necessary.

The polypropylene based resin spun bonded non woven fabric use in the multi layer non woven fabric of the present invention is not particularly restricted, and can be produced by known various production methods. For example, a primary non woven fabric can be obtained by a known production method in which a polypropylene based resin, raw material for the above mentioned compounding, is melt extruded from an extrusion molding machine, spun through a spinning mouth ring, and the spun fiber is drawn by a gas flow traction apparatus such as an air sucker and the like, if necessary, fibers are opened and fiber are collected by a web collecting apparatus together with gas flow, and if necessary, partially welded by heating means such as heated air, heat roll and the like, particularly by a heat roll, then, taken.

As the bonding mode, heat adhesion such as emboss, calender, hot air and the like, adhesion with adhesives, and mechanical entangling such as needle punch, water punch and the like can be adopted. However, heat adhesion by embossing is preferable from the standpoint of productivity or the like.

This polypropylene based resin spun bonded non woven fabric is usually a non woven fabric made of a polypropylene based resin single body, and at least 50% or more of the outer surface of fibers may also be a complex fiber non woven fabric made of a polypropylene based resin.

These complex fiber non woven fabric can also be a complex fiber of core sheath structure composed of a polypropylene based resin as a sheath component and a resin other than the polypropylene based resin, such as a polyamide based resin, polyester based resin and the like, or a complex fiber of side by side structure in which usually 50 wt% or more of fibers are made of a polypropylene based resin and remaining parts are made of other resins. This core sheath structure complex fiber and side by side structure complex fiber may comprise a combination of two different polypropylene based resins among polypropylene based resins, of course.

Thus obtained primary non woven fabric is excellent in a spinning property, however, depending on the kind of a lubricant, particularly in the case of a fatty amide compound, it does not itself a static friction coefficient specified in the non woven fabric of the present invention, in some cases. In this case, for controlling the static friction coefficient of a non woven fabric in the range of from 0.1 to 0.4, it cannot be controlled in the range of static friction coefficient specified in the present invention until treatment of this non woven fabric under heat by an aging treatment. In conventional non woven fabric production apparatuses, such an aging apparatus is not incorporated, and aging is not usually conducted.

Here, the aging treatment conditions vary depending on the kind of a polypropylene based resin, resin properties thereof such as crystallinity, density, melting point and the like, the kind of a fatty amide compound contained, melting point and solubility in a polypropylene based resin (compatibility) thereof, and the like. Therefore, in view of the properties of a polypropylene based resin, raw material for a non woven fabric and the properties of a fatty amide compound as a lubricant, the static friction coefficient is in the range from 0.1 to 0.4, and specifically determined experimentally in view of properties such as flexibility, feeling, skin tough feeling and the like required for the final product, and bending resistance thereof.

For example, the polypropylene based resin spun bonded non woven fabric used in the present invention is obtained by an aging treatment at temperatures of 30 to 60°C for about 1 to 50 hours of a spun bonded non woven fabric obtained by melt spinning of a polypropylene based resin containing a fatty amide compound.

For example, the following aging treatment conditions can be set specifically when a homopolymer of propylene is used, the isotactic pentad fraction thereof is about 90 mol% and the content of erucic amide is 0.4 wt%.

When the aging temperature is 40°C, the aging time is from about 5 to 50 hours, preferably from about 8 to 24 hours. When the aging time is 24 hours, the aging temperature is from about 32 to 50°C, preferably from about 33 to 45°C. When the aging conditions are gentler than the above mentioned ranges, decrease in static friction coefficient requires too much time, leading to lowering of productivity, in some cases. When the aging conditions are stricter than the above mentioned ranges, the static friction coefficient increases conversely, being undesirable in some cases.

This aging treatment can be usually conducted in an aging room in which non woven fabrics are wound in the form of roll and arranged on core tubes and heated air is circulated. In this aging, even if non woven fabrics are wound in the form of roll, the non woven fabric can get a uniform aging treatment effect due to the gas permeability of the non woven fabric. Further, not in the condition of wound non woven fabric, but aging can also be conducted by roll heating and/or heated air while running between rolls.

Next, another method of imparting a static friction coefficient to the polypropylene based resin spun bonded non woven fabric constituting the multi layer non woven fabric of the present invention is a method of surface treating fibers of the resulting non woven fabric by spinning. As the surface treatment agent, for example, dimethylsiloxane, methylhydrogenpolysiloxane, fatty amide containing compounds, and the like can be used. However, this surface treatment has problems such as that treatment of inside is impossible, and the like, depending on wet treatment processes, drying processes and the thickness of a non woven fabric, and the above mentioned method of melt mixing of a lubricant is preferable in may cases depending on the form, application and the static friction coefficient range of a non woven fabric, and the like.

The spun bonded non woven fabric made of a polypropylene based resin constituting the non woven fabric laminate of the present invention is usually hydrophobic, and depending on applications of absorptive articles and the like, for example, in the case of use as a top material of disposable diapers and sanitary napkins, hydrophilicity is required for permeation of water, in some cases. In this case, a non woven fabric cannot be subjected to hydrophilicity imparting treatment.

Though this hydrophilicity imparting treatment includes introduction of a hydrophilic group such as a carboxyl group and the like by treatment with ozone, and surface treatment with a hydrophilic compound, and from the standpoint of an effect, treatment with a hydrophilic compound solution is preferable. As the imparting treatment method, a spray method, coating method, immersion method and the like are exemplified. As the hydrophilic compound, for example, alkyl ester based compounds such as polyhydric alcohols having 8 to 26 carbon atoms containing polyoxyethylene, alkyl ether based compounds, fatty amide group containing polyethers, fatty monoglycerides, sorbitan ester derivatives, alkyl phosphate metal salts, alkyl sulfate metal salts, polyoxyethylene alkyl ether sulfate metal salts, alkyl sulfosuccinate metal salts, saccharide derivatives having a glucose ring, and the like are exemplified.

The spun bonded non woven fabric made of a polypropylene based resin can get remarkably improved touch feelings such as flexibility, feeling, skin touch feeling and the like, and improved use feeling while maintaining essential properties of a non woven fabric of the polypropylene based resin itself, namely, strength, heat resistance, bending resistance and the like, by decrease in static friction coefficient by this aging treatment and surface treatment.

Next, the polypropylene based resin melt blown non woven fabric constituting the multi layer non woven fabric of the present invention is a non woven fabric made of extremely fine fibers, and usually made of fibers having a fiber diameter of 0.1 to 10 µm, preferably 0.2 to 6 µm, and has a mass per unit area of 1 to 45 g/m², preferably 2 to 30 g/m². These fiber diameter and mass per unit area significantly affect the moisture permeability, gas permeability, water resistance of a multi layer non woven fabric, the leak resistance of fine powders, and the like, and can be appropriately selected within the above mentioned ranges so that the required properties are satisfied by applications of the multi layer non woven fabric. For example, in the case of a side gather of disposable diapers, it is from 1 to 5 g/m², and in the case of a diaper back sheet and medical sheet, it is from 5 to 30 g/m².

The polypropylene based resin melt blown non woven fabric can be obtained by a known method in which heated gas flow of high seed is blown to fine stream of a melt polypropylene based resin, and by the action of this gas flow, the melted resin is drawn to give extremely fine fibers which are collected to be made into a sheet.

As the polypropylene based resin constituting this melt blown non woven fabric, the above mentioned polypropylene based resins used in the spun bonded non woven fabric can be used likewise. This polypropylene based resin melt blown non woven fabric cannot necessarily be specified easily, depending on the gas permeability, moisture permeability and water preventing property of a multi layer non woven fabric and applications of the multi layer non woven fabric of the present invention, and in general, the moisture permeability as the multi layer non woven fabric is usually 1000 g/m² • 24 hours or more, preferably 2000 g/m² • 24 hours or more. The water preventing property (water pressure resistance) is, though different depending on applications thereof, 1 kPa or more, preferably 10 kPa or more.

The multi layer non woven fabric of the present invention is composed of a plurality of layers of the specific polypropylene based resin spun bonded non woven fabric and polypropylene based resin melt blown non woven fabric as described above. The method of laminating the both non woven fabrics is not particularly restricted, and various methods can be adopted.

In the lamination method, usually, the above mentioned polypropylene based resin spun bonded non woven fabric, for example, having been subjected to the aging treatment and having a static friction coefficient of 0.1 to 0.4 is laminated on and adheres to the polypropylene based resin melt blown non woven fabric so that the spun bonded non woven fabric is situated at least one surface of the melt blown non woven fabric. However, in some cases, it is also possible the laminate the spun bonded non woven fabric and the melt blown non woven fabric before the aging treatment. In this case, listed is an inline lamination method in which, for example, in spinning a melt blown non woven fabric on a spun bonded non woven fabric, and if necessary, further continuously producing spun bonded non woven fabrics on this in a several stages, a fatty amide is contained in the polypropylene based resin for the spun bonded non woven fabric and a multi layer non woven fabric is previously produced, then, this multi layer non woven fabric is subjected to aging treatment.

As the lamination means for obtaining this multi layer non woven fabric, various lamination means such as heat adhesion, adhesion with adhesives and the like are mentioned, and there can be adopted the above mentioned inline lamination heat adhesion means which are simple and cheap, particularly, a heat emboss roll method. In this heat emboss roll method, lamination can be conducted using a known lamination apparatus having an emboss roll and a flat roll. Here, as the emboss roll, emboss patterns of various forms can be adopted, and lattice form in which fusion parts are continuous, lattice form in which fusion parts are dependent, arbitrary distribution and the like are mentioned. The emboss area ratio is in the range of from about 5 to 40%. These emboss patterns, emboss area ratio, temperature, pressure and the like can be appropriately selected depending on the fiber diameter, thickness, mass per unit area, layer ratio, gas permeability, processing speed and the like of a non woven fabric.

In the dry laminate method, it is important to secure the moisture permeability and gas permeability of the non woven fabric laminate of the present invention at certain levels or more, and it is necessary to control them by the coated amount of a hot melt adhesive coated on the lamination surface, the existence ratio of adhesion points, and the like. Specifically, the amount of a hot melt adhesive is from 0.1 to 5 g/m², and as the coating method, it is preferable to adopt not a usual coating means but a means capable of spraying in the form of fiber to give partial adhesion. As the adhesive in this case, ethylene vinyl acetate based adhesives, polyurethane based adhesives, polyester based adhesives and the like are used. A method of coating an adhesive in the form of patterns and conducting dry laminating can also be adopted.

The multi layer non woven fabric of the present invention is mainly composed of a polypropylene based resin spun bonded non woven fabric, and specifically, spun bonded non woven fabric:melt blown non woven fabric (mass per unit area) is 95:5 to 60:40, preferably 90:10 to 75:25. Namely, the main part of the multi layer non woven fabric is made of a spun bonded non woven fabric, and flexibility, feeling and skin touch thereof are remarkably improved by basic properties such as the strength, elastic modulus and the like of a spun bonded non woven fabric and by complexing of a slight proportion of melt blown non woven fabric.

The multi layer non woven fabric of the present invention can also be made of two layers as described above. In this case, however, the problems of surface conditions of a melt blown non woven fabric still remain. For this, use positions and applications thereof are naturally limited. Therefore, it is preferable to give a three layer structure in which a melt blown non woven fabric is sandwiched by spun bonded non woven fabrics. In this case, depending on applications, the layer ratio of the spun bonded non woven fabrics in the both outer layers can be appropriately changed.

The multi layer non woven fabric of the present invention can be made as a multi layer non woven fabric having various properties by selection and combination of the kinds, mass per unit area, thickness, gas permeability, moisture permeability and the like of a polypropylene based resin spun bonded non woven fabric and a polypropylene based resin melt blown non woven fabric. Therefore, gas permeability, moisture permeability, water preventing property and finer powder barrier resistance are established simultaneously, and additionally, excellent properties such as strength, flexibility, feeling, skin touch feeling and the like and secondary processabilities because of excellent stiffness are satisfied together, and development into various applications is possible. Specifically, the multi layer non woven fabric can be effectively used for back sheets and side gathers of absorptive articles (hygienic articles) such as disposable diapers, sanitary napkins, incontinence pads and the like, powder wrapping materials, medical sheets and the like having functions such as moisture absorbing agents, de-oxygen agents, de-odoring agents and the like.

The multi layer non woven fabric of the present invention will be illustrated in detail below based on one production example, but the scope of the invention is not limited to the examples.

### Example 1 [Inline production of multi layer non woven fabric]

As the non woven fabric production apparatus, that of multi stage mode was used. Into 100 parts by weight of a crystalline polypropylene resin [isotactic pentad fraction: 91 mol%, MFR: 60 g/10 minutes, melting point: 160°C] was dry blended 0.035 parts by weight of a phenol based antioxidant (manufactured by Chiba Specialty Chemicals, Irganox 1010), 0.035 parts by weight of a phosphorus based antioxidant (manufactured by Sand, Sandstub P-EPQ), 0.025 parts by weight of a neutralization agent (manufactured by Kyodo Yakuhin K.K., calcium stearate) and 0.4 parts by weight of erucic amide, by a super mixer, then, the mixture was melt kneaded at 220°C using a 65 mm ϕ extrusion molding machine, and extruded through a spinning mouth ring, for melt spinning. The spinning mouth rings in this case have a caliber of 0.3 mm and 200 rings were arranged along the width direction and 15 rings were arranged along the extrusion direction.

Then, the spun fibers were introduced into an air sucker and traction stretched, and collected on a belt having a suction apparatus. On this polypropylene spun bonded non woven fabric, a melt blown non woven fabric was formed by the above mentioned crystalline polypropylene resin containing no erucic amide, then, further, on this was laminated the same polypropylene spun bonded non woven fabric as described above, subsequently, transferred to a heat emboss roller, and emboss adhered under emboss conditions shown in Table 1, and taken on a paper tube, to obtain a primary multi layer non woven fabric composed of three layers of spun bonded non woven fabric/melt blown non woven fabric/spun bonded non woven fabric.

The resulted taken multi layer non woven fabric was subjected to aging treatment under aging conditions [temperature: 40°C, 24 hours] to obtain a three layer non woven fabric of the present invention. Thread cut and rolling were not found in the spinning process, and an excellent spinning property was shown. Further, controlling the spinning conditions, a three layer non woven fabric was obtained composed of a spun bonded non woven fabric [average fiber diameter: 17 µm, mass per unit area: 7 g/m²] and a melt blown non woven fabric [average fiber diameter: 1 µm, mass per unit area: 3 g/m²] and having a total mass per unit area of 17 g/m². The multi layer non woven fabric, production conditions are shown in table 1 and property evaluation results and secondary processabily are shown in Table 2. The evaluation of the multi layer non woven fabric was conducted based on the following descriptions.
(1) Static friction coefficient
   It was measured according to the static friction coefficient measurement method of ASTM-D1894. For details, see the above mentioned descriptions.
(2) Bending resistance [total of longitudinal and transversal]
   It was measured according to JIS L 1096 6. 19. 1A method (45° cantilever method).
(3) Feeling
   A functional test was conducted by skin tough and hand tough by 20 monitors, and evaluated by ⓞ, ○ and Δ. In the functional test, the same three layer non woven fabric using a usual spun bonded non woven fabric containing no erucic amide (Comparative Example 1) was evaluated as Δ.
(4) Water pressure resistance
   It was measured according to JIS L 1092 (high water pressure method).
(5) Secondary procesability
   A hot melt type adhesive containing ethylene vinyl acetate "H-6805" [manufactured by Nitta Findray K.K.] was sprayed in the form of fiber on a polypropylene multi layer non woven fabric using a fiber spray die of nozzle discharge mode so that the coating amount was 4 g/m². Then, on this, an inorganic filler containing stretched PE moisture permeable film "Polam PU35" (thickness: 35 µm) manufactured by Tokuyama K.K. was pasted overlapping to product a non woven fabric laminate. In establishing this pasting, wrinkling, meandering and powdering was evaluated as Δ and processing without problems was evaluated as ⓞ.

### Comparative Example 1

A three layer non woven fabric was obtained in the same manner as in Example 1 except that addition of erucic amide and aging treatment were not conducted in Example 1. The multi layer non woven fabric, production conditions according to Example 1 are shown in Table 1, and the property evaluation results and secondary processability are shown in Table 2.

### Comparative Example 2

Using the polypropylene based resin containing no erucic amide used in Example 1, a single layer spun bonded non woven fabric (no aging treatment) was obtained. The non woven fabric, production conditions according to Example 1 are shown in Table 1, and the property evaluation results and secondary processability are shown in Table 2.

### Comparative Example 3

A single layer spun bonded non woven fabric (no aging treatment) was obtained except that the fiber diameter and mass per unit area were changed in Comparative Example 2. The non woven fabric, production conditions are shown in Table 1, and the property evaluation results and secondary processability are shown in Table 2.

These results show that the present invention shows significantly lowered bending resistance and significantly improved flexibility, feeling and skin tough as compared with Comparative Example 1. This is more than a non woven fabric obtained by compounding a thermoplastic elastomer in fair amount into a polypropylene based resin. Additionally, the secondary processability is equivalent. In comparison with the single layer spun bonded non woven fabric of Comparative Example 2, it is apparent that when the fiber diameter is decreased, the bending resistance can be decreased, however, simultaneous satisfaction with the secondary processability is impossible. Further, in comparison with Comparative Example 3, it is apparent that it is necessary to maintain fiber diameter and mass per unit area at certain levels for satisfying the secondary processbaility, and it is apparent that it is difficult to satisfy the secondary processability and flexibility, feeling and skin touch feeling simultaneously by these methods.

**Table 1**

| | Layer | | Emboss conditions | | |
|---|---|---|---|---|---|
| | constitution * | Mass per unit area | Area ratio | Pressure | Temperature (°C) |
| | Fiber diameter (µm) | (g/m²) | % | N/cm | Emboss side/flat side |
| Example 1 | S/MIS 17/1/17 | 7/3/7 | 20 | 500 | 135/135 |
| Comparative example 1 | S/M/S 17/1/17 | 7/3/7 | 20 | 500 | 135/135 |
| Comparative example 2 | S 14 | 17 | 20 | 500 | 130/130 |
| Comparative example 3 | S 18 | 18 | 20 | 500 | 135/135 |

| | | | | | |
|---|---|---|---|---|---|
| * S: spun bonded non woven fabric M: melt blown non woven fabric | | | | | |

**Table 2**

| | Static friction coefficient | Bending resistance(mm) | | | Feeling | Water pressure resistance mmH₂O | Secondary Process-ability |
|---|---|---|---|---|---|---|---|
| | | Longitudinal | Transversal | Total | | | |
| Example 1 | 0.29 | 42 | 39 | 81 | ⓞ | 105 | ⓞ |
| Comparative example 1 | 0.60 | 65 | 35 | 100 | Δ | 108 | ⓞ |
| Comparative example 2 | 0.55 | 43 | 20 | 63 | ⓞ | 60 | Δ |
| Comparative example 3 | 0.62 | 57 | 38 | 95 | Δ | 68 | ⓞ |

### Industrial Applicability

The multi layer non woven fabric obtained by complexing a spun bonded non woven fabric and a melt blown non woven fabric, made of polypropylene based resins can be suitably used for various applications, particularly, back sheet materials and side gather materials for absorptive articles such as disposable diapers, sanitary napkins and the like, and for medical materials, powder wrapping materials and the like.

## Claims

1. A multi layer non woven fabric having a polypropylene based resin spun bonded non woven fabric and a polypropylene based resin melt blown non woven fabric, **characterized in that** it has a bending resistance [the sum of the values for longitudinal and transverse directions as measured according to JIS L 1096 6.19.1 A method (45° cantilever method)] of 70 to 120 mm, and the surface of the spun bonded non woven fabric has a static friction coefficient of 0.1 to 0.4.

2. The multi layer non woven fabric according to Claim 1 wherein the multi layer non woven fabric has a polypropylene based resin melt blown non woven fabric between propylene based resin spun bonded non woven fabrics.

3. The multi layer non woven fabric according to Claim 1 or 2 wherein the spun bonded non woven fabric has an average fiber diameter of 10 to 30 µm and the mass per unit area of the multi layer non woven fabric is from 10 to 50 g/m².

4. The multi layer non woven fabric according to any of Claims 1 to 3 wherein the spun bonded non woven fabric contains a lubricant in an amount of 0.05 to 1.0% by weight.

5. The multi layer non woven fabric according to any of Claims 1 to 4 wherein the lubricant is a fatty amide compound.

6. An absorptive article obtained by using the multi layer non woven fabric according to any of Claims 1 to 5.

7. A medical sheet obtained by using the multi layer non woven fabric according to any of Claims 1 to 5.

8. A powder wrapping material obtained by using the multi layer non woven fabric according to any of Claims 1 to 5.
